# EUROPÄISCHE PATENTANMELDUNG

(11) **EP 3 502 989 A1**
(43) Veröffentlichungstag der Anmeldung: **26.06.2019**
(21) Anmeldenummer: 18208766.8
(22) Anmeldetag: 28.11.2018
(51) Int. Cl.: G06Q 20/06, G06Q 20/38, H04L 9/32

(54) **VERFAHREN ZUR ERSTELLUNG UND HANDHABUNG EINES SMART CONTRACTS**

(30) Priorität: 21.12.2017 DE 102017223522
(71) Anmelder: Siemens Aktiengesellschaft, 80333 München (DE)
(72) Erfinder: Braband, Jens, 38106 Braunschweig (DE)

(57) **Zusammenfassung**

Die Erfindung betrifft ein Verfahren zur Erstellung und Handhabung eines Smart Contracts, bei dem der Inhalt des Smart Contracts in Form von Anweisungen in einer vorbestimmten Programmiersprache verfasst wird, bei dem der Smart Contract in eine Blockchain eingestellt wird, bei dem wenigstens eine vom Smart Contract zu erfüllende Eigenschaft festgelegt wird, bei dem ein Beweis bestimmt wird, mit dem die Erfüllung der wenigstens einen Eigenschaft des Smart Contracts herleitbar ist, und bei dem Informationen zu dem Beweis und die Eigenschaft so abgelegt werden, dass sie für Teilnehmer der Blockchain zugänglich sind. Mit diesem Verfahren können komplexe Smart Contracts erstellt werden, die eine geringe Fehlerwahrscheinlichkeit aufweisen.

## Beschreibung

Smart Contracts werden in der Blockchain-Technologie verwendet, beispielsweise um Verträge sicher in einer Blockchain abzulegen und Geschäftsprozesse zu automatisieren. Dabei werden die vertraglichen Regelungen des Smart Contracts, also des intelligenten Vertrags mit der Programmiersprache, die für die Blockchain vorgegeben ist, definiert. Dabei kann das Problem entstehen, dass die zur Definition benutzten Programmiersprachen entweder zu simpel sind, um komplexe Vorgänge abzubilden, oder die Programmiersprachen sind sehr komplex und damit fehleranfällig. Fehler in der Programmierung eines Smart Contracts können große Probleme verursachen, weil unbeabsichtigte Aktionen ausgelöst werden können. Diese Aktionen können erhebliche finanzielle Verluste oder eine Diskreditierung der Blockchain verursachen, weil beispielsweise eine Fehlerbehebung nur mittels sogenannter Hard Forks möglich ist.

Eine Blockchain ist der englische Ausdruck für Blockkette. Darunter wird eine kontinuierlich erweiterbare Liste von Datensätzen, die Blöcke genannt werden, verstanden, die mittels kryptografischer Verfahren miteinander verkettet sind. Jeder Block enthält dabei üblicherweise einen kryptografisch sicheren Hash-Wert des vorhergehenden Blocks, einen Zeitstempel und ggf. weitere Transaktionsdaten.

Unter einem Hard Fork ist das Ergebnis einer Änderung im Protokoll der Blockchain zu verstehen, die nicht abwärts kompatibel ist.

Eine Blockchain, in der Smart Contracts abgelegt sind, ist beispielsweise in der WO 2017/145007 A1 beschrieben.

BitCoin als eine der bekanntesten Blockchains nutzt beispielsweise eine relativ einfache Skriptsprache, die dadurch für das Abbilden von komplexen Smart Contracts eher ungeeignet ist. Ethereum als eine weitere bekannte Blockchain arbeitet mit einer komplexen Java- oder C++-ähnlichne Programmiersprache, die zwar komplexe Verträge gut abbilden kann, aber durch die Komplexität auch fehleranfällig ist.

Die Aufgabe der vorliegenden Erfindung ist es, ein Verfahren zur Erstellung und Handhabung eines Smart Contracts bereitzustellen, mit dem auch komplexe Verträge abgebildet werden können und das trotzdem wenig fehleranfällig ist.

Die Aufgabe wird gelöst durch ein Verfahren zur Erstellung und Handhabung eines Smart Contracts, bei dem der Inhalt des Smart Contracts in Form von Anweisungen in einer vorbestimmten Programmiersprache verfasst wird, bei dem der Smart Contract in eine Blockchain eingestellt wird, bei dem wenigstens eine vom Smart Contract zu erfüllende Eigenschaft festgelegt wird, bei dem ein Beweis bestimmt wird, mit dem die Erfüllung der wenigstens einen Eigenschaft des Smart Contracts herleitbar ist, und bei dem Informationen zu dem Beweis und die Eigenschaft so abgelegt werden, dass sie für Teilnehmer der Blockchain zugänglich sind.

Das erfindungsgemäße Verfahren hat den Vorteil, dass eine Programmiersprache verwendet werden kann, die beweisbare Eigenschaften hat. Dadurch kann überprüft werden, ob der Smart Contract fehlerfrei programmiert ist und arbeitet.

Die Beweisbarkeit von Programmierungen ist beispielsweise auch aus bestimmten Sicherheitsanwendungen bekannt. Hierbei werden die Programmierungen mathematisch bewiesen, beispielsweise mittels Theorem Proving oder Model Checking. Als Beispiel wäre hier der sogenannte Tool Prover zu nennen. Allerdings ist ein direkter Beweis lediglich für einfache Programmierungen möglich. Bei komplexen Programmierungen könnte die Rechenleistung der Teilnehmer der Blockchain nicht ausreichen, um einen Beweis selbständig herzuleiten und nachzuvollziehen. Daher werden bei dem erfindungsgemäßen Verfahren sowohl wenigstens eine vom Smart Contract zu erfüllende Eigenschaft festgelegt und auch Informationen zu deren Beweis für alle Teilnehmer der Blockchain zugänglich abgelegt. Als Informationen zu dem Beweis sind hier insbesondere Zwischenschritte zu verstehen, die für einen erfolgreichen Beweis der Erfüllung der Eigenschaft benötigt werden. Dadurch ist für jeden Teilnehmer der Blockchain die Richtigkeit der vorgegebenen Eigenschaft und damit die Richtigkeit der Programmierung des Smart Contracts jederzeit zu überprüfen und nachzuvollziehen.

Durch das erfindungsgemäße Verfahren wird eine gesteigerte Verlässlichkeit von Smart Contracts realisiert, so dass kostspielige und/oder geschäftsschädigende Hard Forks vermieden werden können. Durch das erfindungsgemäße Verfahren sind auch komplexe Programmiersprachen verwendbar, weil deren Fehleranfälligkeit bei einer komplexen Programmierung durch das erfindungsgemäße Verfahren kompensiert wird. Zwar wird durch die geforderte Beweisbarkeit der wenigstens einen Eigenschaft die Komplexität in der Programmierung des Smart Contracts eingeschränkt, aber die Verlässlichkeit wird damit erhöht. Dies ist insbesondere für kritische Anwendungen, bei denen beispielsweise finanztechnische Transaktionen durchgeführt werden, vorteilhaft. Durch eine Verbesserung der Beweisverfahren oder eine Verbesserung der zur Verfügung stehenden Hardware, erhöht sich selbstverständlich auch die mögliche Komplexität des Smart Contracts. Ohne eine Speicherung der Informationen zu dem Beweis, insbesondere der BeweisZwischenschritte, müssten die Teilnehmer diesen Beweis selber herleiten. Dies ist zwar theoretisch auch möglich, führt aber in der Regel zu hohen und unnötigen Aufwendungen in der Validierung, die durch das erfindungsgemäße Verfahren vermieden werden.

Ein Beispiel für einen sehr einfachen Smart Contract könnte beispielsweise ein Dauerauftrag für eine monatliche Überweisung eines festen Geldbetrags an ein bestimmtes Konto sein. Eine zu erfüllende Eigenschaft wäre in diesem Fall beispielsweise die monatliche Überweisung, deren Erfüllung bei dem erfindungsgemäßen Verfahren bewiesen werden könnte. So wird verhindert, dass beispielsweise durch einen Fehler in der Programmierung eine z. B. wöchentliche Überweisung ausgelöst wird.

Das erfindungsgemäße Verfahren kann mit Hilfe von vorteilhaften Ausgestaltungen weiterentwickelt werden, die im Folgenden beschrieben sind.

So kann ein Beweissystem festgelegt werden, in dem der Beweis der Eigenschaft durchführbar ist. Dies hat den Vorteil, dass die Beweisführung durch die Vorgabe des Beweissystems vereinfacht wird. Beispiel für ein Beweissystem kann beispielsweise sein eine Prädikatenlogik oder eine Temporale Logik, z. B. LTL oder CTL.

Um nur geprüfte Smart Contracts in der Blockchain zu haben, kann der Smart Contract in die Blockchain erst eingestellt werden, nachdem die Erfüllung der Eigenschaft mit Hilfe des Beweises hergeleitet wurde. Beispielsweise Miner einer Blockchain können die Erfüllung der vorbestimmten Eigenschaft des Smart Contracts prüfen, bevor sie den Smart Contract in die Blockchain einstellen. Miner einer Blockchain sind Teilnehmer, die in der Lage sind, neue Blöcke zu erstellen.

Ferner können für den Smart Contract mehrere Annahmen für die Eigenschaft festgelegt werden, die diese erfüllen oder nicht erfüllen soll. Dies kann auch beinhalten, dass gewisse Annahmen verboten sind. Annahmen könnten sich z. B. auf den Wertebereich von Variablen beziehen z. b. bei einer Überweisung, dass der Betrag größer Null ist und unter einem bestimmten Überweisungslimit liegt. Dann kann der Beweis auf diesen Wertebereich eingeschränkt werden. Dies vereinfacht manche Beweise.

Um den Zugriff der Teilnehmer auf die Informationen zu dem Beweis und die Eigenschaft zu vereinfachen, können die Informationen zum Beweis und die Eigenschaft in einer Datenbank abgelegt werden. Alternativ kann auf die Datenbank verzichtet werden und die Daten in der Blockchain selber abgelegt werden.

In einer weiteren vorteilhaften Ausgestaltung kann wenigstens eine Pflichteigenschaft vorbestimmt werden, die der Smart Contract erfüllen muss. Eine solche Pflichteigenschaft, die für alle Smart Contracts einer Blockchain gelten sollen, kann beispielsweise eine endliche Anzahl von Schritten sein, so dass keine Endlosschleifen innerhalb von Contracts möglich sind. Weiterhin können hiermit gewisse Verlässlichkeitseigenschaften eingefordert sein, beispielsweise dass eine Menge einer Ressource nicht über oder unter einem vorbestimmten Schwellwert liegt.

Um die Sicherheit des erfindungsgemäßen Verfahrens weiter zu erhöhen, kann die vorbestimmte Programmiersprache Turing-vollständig sein.

Schließlich betrifft die Erfindung auch ein Computerprogrammprodukt mit Programmbefehlen zur Durchführung des Verfahrens nach einer der zuvor genannten Ausführungsformen und ein Blockchain-System mit Strukturen zur Durchführung des Verfahrens nach einer der zuvor genannten Ausführungsformen.

Im Folgenden wird ein beispielhafter Ablauf des erfindungsgemäßen Verfahrens zur Erstellung und Handhabung eines Smart Contracts beschrieben.

Der Aufbau eines beispielhaften mittels des erfindungsgemäßen Verfahrens erstellten und verlässlichen Smart Contracts ist in der folgenden Tabelle dargestellt:

| | |
|---|---|
| Smart Contract | C |
| Eigenschaften | E |
| Annahmen | A |
| Beweiszwischenschritte | Z=Z(C,A,E) mit A->E unter C im Beweissystem B |
| Hash | H=H(C,B,E,A,Z) |

Grundsätzlich wird in diesem Beispiel jeder Teilnehmer der Blockchain durch PKI (Public-Key-Infrastructure) identifiziert und zwar insbesondere durch den Hash-Wert seines privaten Schlüssels.

Der beispielhafte Smart Contract wird zunächst in einer vorgegebenen Programmiersprache geschrieben, die Turing-vollständig sein kann. Für die spezielle Blockchain, in die der Smart Contract eingestellt werden soll, ist ein Beweissystem B festgelegt.

Anschließend wird wenigstens eine Eigenschaft E definiert, die der Smart Contract erfüllen soll, sowie möglicherweise nötige Annahmen A dafür. Dies wird von dem Teilnehmer durchgeführt, der den Smart Contract in die Blockchain einbringen will. Zusätzlich können für die Blockchain zusätzlich allgemeine Pflichteigenschaften vorgegeben sein, die jeder Smart Contract erfüllen muss, der in die Blockchain eingestellt werden soll. Diese Pflichteigenschaften können beispielsweise sein, dass der Smart Contract nach einer endlichen Anzahl von Schritten stoppt, so dass beispielsweise Endlosschleifen vermieden werden. Weiterhin können gewissen Verlässlichkeitseigenschaften zur Erfüllung vorgegeben werden, beispielsweise dass eine Menge einer Ressource nicht unter über einen bestimmten Schwellwert geht. Weiterhin können gewissen Annahmen A für die eine oder mehrere Eigenschaften E gefordert oder verboten werden.

Nach der Erstellung des Smart Contracts C und der Festlegung der Eigenschaften E und ggf. der Annahmen A wird die Erfüllung der Eigenschaften E im Beweissystem B bewiesen. Falls dieser erste Beweis fehlschlägt, liegt eine fehlerhafte Erstellung des Smart Contracts vor oder der Smart Contract ist zu komplex. In diesem Fall muss die Programmierung des Smart Contracts überprüft und ggf. korrigiert werden. Wenn der Beweis erfolgreich geführt worden ist, werden die zum erfolgreichen Beweis nötigen Beweiszwischenschritte Z als Informationen zu dem Beweis festgehalten. Mit Hilfe dieser Informationen zum Beweis ist ein erneuter Beweis der Erfüllung der geforderten Eigenschaften ohne große Rechenleistung und Aufwand möglich.

Anschließend erzeugt der Teilnehmer einen Hash-Wert H über die genannten Daten, nämlich den Smart Contract C, das Beweissystem B, der definierten Eigenschaften E, der Annahmen A und der Beweiszwischenschritte Z. Es gilt also
H=H(C,B,E,A,Z).

Nun wird der Smart Contract in die Blockchain eingestellt und der Hash-Wert H als Kommentar hinzugefügt. Die Originaldaten, die zu dem Hashwert H gehören, also der Contract C, das Beweissystem B, die Eigenschaften E, die Annahmen A und die Beweiszwischenschritte Z werden in einer Datenbank abgelegt und mit dem privaten Schlüssel des Teilnehmers signiert.

Das Einstellen des Contracts in die Blockchain wird von einem sogenannten Miner der Blockchain aus einer Vielzahl von Minern durchgeführt. Die Miner haben ebenfalls Zugang zur Blockchain und verfügen über die nötige Rechenleistung, um einen neuen Bock der Blockchain zu erstellen. Beim Einstellen des Smart Contracts in die Blockchain prüft jeder Miner der Blockchain anhand der zu dem Hash-Wert aus der Datenbank abgerufenen Daten, ob zunächst die Daten korrekt sind und der Hash-Wert stimmt. Dies wird mit dem öffentlichen Schlüssel des Teilnehmers überprüft. Weiterhin wird geprüft, ob der Smart Contract C syntaktisch korrekt ist und die Mindestanforderungen an Annahmen A und Eigenschaften E erfüllt sind, die für die Blockchain festgelegt sind. Schließlich prüft jeder Miner mit Hilfe des durch die Beweiszwischenschritte Z beschriebenen Beweises, dass die Erfüllung der Eigenschaften E korrekt ist. Ist dies alles der Fall, wird der Smart Contract von einem der Miner in die Blockchain eingestellt.

Als eine alternative Ausführung kann auch die zusätzliche Datenbank verzichtet werden und die dort abgelegten oben genannten Daten als Kommentare oder als Dummy-Code im Smart Contract abgespeichert werden.

Bei einfachen Anwendungen, bei denen die Beweise wenig komplex sind oder die Teilnehmer rechenstark sind, kann auch auf die Speicherung der Beweiszwischenschritte Z verzichtet werden.

## Patentansprüche

1. Verfahren zur Erstellung und Handhabung eines Smart Contracts,
bei dem der Inhalt des Smart Contracts in Form von Anweisungen in einer vorbestimmten Programmiersprache verfasst wird, bei dem der Smart Contract in eine Blockchain eingestellt wird,
bei dem wenigstens eine vom Smart Contract zu erfüllende Eigenschaft festgelegt wird,
bei dem ein Beweis bestimmt wird, mit dem die Erfüllung der wenigstens einen Eigenschaft des Smart Contracts herleitbar ist, und
bei dem Informationen zu dem Beweis und die Eigenschaft so abgelegt werden, dass sie für Teilnehmer der Blockchain zugänglich sind.

2. Verfahren nach Anspruch 1,
**dadurch gekennzeichnet, dass**
ein Beweissystem festgelegt wird, in dem der Beweis der Eigenschaft durchführbar ist.

3. Verfahren nach Anspruch 1 oder 2,
**dadurch gekennzeichnet, dass**
der Smart Contract in die Blockchain eingestellt wird, nachdem die Erfüllung der Eigenschaft mit Hilfe des Beweises hergeleitet wurde.

4. Verfahren nach einem der oben genannten Ansprüche,
**dadurch gekennzeichnet, dass**
für den Smart Contract mehrere Annahmen für die Eigenschaft festgelegt werden, die diese erfüllen oder nicht erfüllen soll.

5. Verfahren nach einem der oben genannten Ansprüche,
**dadurch gekennzeichnet, dass**
die Informationen zum Beweis und die Eigenschaft in einer Datenbank abgelegt werden.

6. Verfahren nach einem der oben genannten Ansprüche,
**dadurch gekennzeichnet, dass**
wenigstens eine Pflicht-Eigenschaft vorbestimmt wird, die der Smart Contract erfüllen muss.

7. Verfahren nach einem der oben genannten Ansprüche,
**dadurch gekennzeichnet, dass**
die vorbestimmt Programmiersprache Turing-vollständig ist.

8. Computerprogrammprodukt mit Programmbefehlen zur Durchführung des Verfahrens nach einem der Ansprüche 1 - 7.

9. Blockchain-System mit Strukturen zur Durchführung des Verfahrens nach einem der Ansprüche 1 - 7.
